# EUROPÄISCHE PATENTANMELDUNG

(11) **EP 1 111 154 A2**
(43) Veröffentlichungstag der Anmeldung: **27.06.2001**
(21) Anmeldenummer: 00122784.2
(22) Anmeldetag: 19.10.2000
(51) Int. Cl.: E04D 15/04, E04D 15/06, B29C 65/10, B29C 65/78

(54) **Einrichtung und Verfahren zur Ermittlung von optimalen Parametern zum Betreiben von Handhabungsgeräten oder sonstigen Vorrichtungen zum Heissgasverschweissen**

(30) Priorität: 22.12.1999 DE 19962103
(71) Anmelder: Braas Flachdachsysteme GmbH & Co. KG, 68199 Mannheim (DE)
(72) Erfinder: Hamann, Stefan, 55411 Bingen am Rhein (DE)
(74) Vertreter: Kruspig, Volkmar, Dipl.-Ing.

(57) **Zusammenfassung**

Die Erfindung betrifft eine Einrichtung und ein Verfahren zur Ermittlung von optimalen Parametern zum Betreiben von Handhabungsgeräten oder sonstigen Vorrichtungen zum Heißgasverschweißen von Kunststoff-Dachbahnen. Erfindungsgemäß ist eine erste Sensorik zur automatischen Erfassung von Herstellerangaben zur Identifikation des Dachbahnmaterials und dessen Eigenschaften anhand der Kennzeichnung selbst und/oder durch Auslesen einer Look-up-Tabelle eines Speicherbausteins vorgesehen. Eine zweite Sensorik dient der Erfassung der Dachbahntemperatur, wobei eine Recheneinheit aus den Sensorikdaten die Schweißtemperätur und die Vorschubgeschwindigkeit bestimmt und diese Werte über eine Schnittstelle den Handhabungsgeräten bereitstellt und/oder mittels eines Displays oder einer akustischen Anzeige als Vorgabewerte darstellt.

## Beschreibung

Die Erfindung betrifft eine Einrichtung und ein Verfahren zur Ermittlung von optimalen Parametern zum Betreiben von Handhabungsgeräten oder sonstigen Vorrichtungen zum Heißgasverschweißen von Kunststoff-Dachbahnen gemäß Oberbegriff der Patentansprüche 1 bzw. 10.

Aus der DE 198 13 625 C1 ist ein Verfahren und ein Fahrzeug zum Verbinden von mit überlappenden Rändern verlegten Dachbahnen bekannt, bei dem ein angetriebenes Fahrzeug entlang einer Überlappungszone der zu verbindenden Dachbahnen geführt wird und die Dachbahnen durch ein mitgeführtes Schweißgerät verbunden werden. Um die Herstellung der Verbindung zu erleichtern und eine optimale Verbindungsqualität zu ermöglichen, wird dort vorgeschlagen, daß zumindest eine Dachbahn parallel zum Rand verlaufend zumindest eine die Bewegungsbahn des Fahrzeugs vorgegebene Leitlinie aufweist, die während der Bewegung des Fahrzeugs von zumindest einem ersten Sensor erfaßt wird. Hierbei wird ein erstes Signal gebildet, das sich beim Abweichen des Fahrzeugs von der vorgegebenen Bewegungsbahn verändert und das bei einer Änderung des ersten Signals von einer Steuerungseinheit Steuerungssignale für eine Lenkeinrichtung des Fahrzeugs erstellt.

Mit der in der DE 198 13 625 C1 aufgezeigten Lehre gelingt es, die Qualität bei der Erstellung von überlappenden Dachbahnen im Sinne einer flüssigkeitsdichten Verbindung zu verbessern, wobei jedoch Voraussetzung hierfür ist, daß dem automatisch geführten fahrbaren Schweißgerät optimale Verfahrensparameter bezogen auf das Dachbahnmaterial zur Verfügung gestellt werden.

Aus der US-PS 5,525,186 ist ein scheibenförmiger Träger zur Verwendung bei dem Verbinden von Kunststofftuben bekannt. Das Verbinden selbst geschieht mittels Schweißen, wobei durch ein zu sensierendes Material die Schweißvorrichtung aktiviert oder deaktiviert wird.

Beim Erstellen von Heißluft- oder Heißgas-Schweißverbindungen von großflächig zu verlegenden Dachbahnen bestehen grundsätzlich die nachstehend beschriebenen Probleme.
Die derzeit genutzten Technologien beim Herstellen einer Nahtverbindung von Dachbahnen auf sehr flach geneigten Dächern greifen auf Handgeräte und Andruckrolle oder einen Schweißautomaten zurück. Die Nähte werden entweder durch Warm- oder Heißgasschweißen oder durch Quellschweißen gezogen, wobei die entsprechenden Tätigkeiten von einer qualifizierten Fachkraft mit Handhabungsgerät nach dem Stand der Technik durchzuführen sind.

Bei der Warmgasverschweißung sind insbesondere Witterungsparameter, die Bahntemperatur, das Material der Dichtungsbahn und deren Verschmutzungsgrad wesentliche Kriterien. Geräteseitig besteht beim Heißgasschweißen die Möglichkeit, die Schweißtemperatur und die Vorschubgeschwindigkeit einzustellen.

Die Hersteller von Kunststoff-Folien zum Einsatz bei Flachdächern geben sogenannte Verarbeitungsfenster an. Bei derartigen Verarbeitungsfenstern müssen die genannten exogenen Parameter exakt aufeinander abgestimmt werden, um ein homogenes Schweißbild in der Nahtführung zu erreichen. Es hat sich gezeigt, daß die unterschiedlichen Dachbahnmaterialien ganz unterschiedliche Schweißfenster nach sich ziehen. Ein sehr enges Schweißfenster besitzen insbesondere TPO (thermoplastische Olefine)-Materialien und daraus hergestellte Bahnen. Hier liegen besonders enge Toleranzgrenzen vor, um ein akzeptables Schweißbild und daraus resultierend eine homogene Nahtführung zu gewährleisten.

Weiterhin hat sich gezeigt, daß gerade bei TPO-Dachbahnmaterialien sich selbst die Schweißfenster unterschiedlicher Dachbahnanbieter erheblich unterscheiden. Hier wirkt sich insbesondere die Rezeptur, d.h. die stoffliche Zusammensetzung einer Dachbahn elementar auf das Schweißhandling aus.

Bisher werden die Einstellungen am Schweißautomaten bzw. am Handgerät so vorgenommen, daß zunächst die Verarbeitungstemperatur eingestellt wird. Im Sommer gilt es dabei, einen empirisch ermittelten Wert in Abhängigkeit vom Bahnmaterial voreinzustellen. Auf die bestehenden Witterungseinflüsse, d.h. Sonnenstand, Bewölkung, Feuchtigkeit oder Tau am Morgen reagiert der Verarbeiter individuell, indem er die Vorschubgeschwindigkeit nach eigenem Ermessen variiert.

Im Winter wird die voreingestellte Verschweißungstemperatur meist über den für das Bahnmaterial typisch angegebenen Werten gewählt. Auch in diesem Fall versucht der Verarbeiter, durch Erfahrungen gestützt unter Berücksichtigung individueller Vorschubwerte, ein optimales Schweißergebnis zu erzielen.
Es ist jedoch einsichtig, daß die empirische Vorgabe von Einstellparametern auch unter Berücksichtigung sich ändernder Witterungsbedingungen über einen Tagesverlauf zu nicht oder nicht ausreichenden Schweißqualitäten führt oder führen kann, was für die Gewährleistungsverpflichtungen seitens des verarbeitenden Unternehmens problematisch ist.
Weiterhin erfordern neue oder Materialien anderer Hersteller das Erlernen einer entsprechend angepaßten oder geänderten Technik, was ebenfalls nachteilig ist.

Aus dem Vorgenannten ist es daher Aufgabe der Erfindung, eine Einrichtung und ein Verfahren zur Ermittlung von optimalen Parametern zum Betreiben von Handhabungsgeräten oder sonstigen Vorrichtungen zur Heißgasverschweißung von Kunststoff-Dachbahnen anzugeben, welche bzw. welches es gestattet, in kurzer Zeit vor Ort die Betriebsbereitschaft der Verlegetechnik herzustellen, wobei auch unter Berücksichtigung unterschiedlicher exogener Bedingungen stets eine optimale, homogene Schweißnahtbildung zu gewährleisten ist.

Die Lösung der Aufgabe der Erfindung erfolgt mit einer Einrichtung gemäß den Merkmalen des Patentanspruchs 1 sowie mit einem Verfahren, wie es im Anspruch 10 vorgestellt ist.
Die Unteransprüche umfassen mindestens zweckmäßige Ausgestaltungen und Weiterbildungen der Erfindung.

Der Grundgedanke der Erfindung besteht demgemäß darin, eine Einrichtung bzw. ein Verfahren zur Ermittlung von optimalen Parametern für das Verschweißen von Kunststoff-Dachbahnen anzugeben, wobei in ausreichender Weise die exogenen Umstände am Ort des Verlegens berücksichtigt werden und gleichzeitig eine automatische Erfassung der Materialeigenschaften der Kunststoff-Dachbahnen, die es zu verlegen gilt, erfolgt. Bevorzugt sind Informationen zur Materialzusammensetzung, zum Herstellungszeitpunkt und damit zum Alter sowie weiterer besonderer Kriterien durch einen Barcode auf dem Dachbahnmaterial angebracht und können dort über eine zugeordnete Sensorik eingescannt, d.h. ausgelesen werden.

Zusätzlich ermittelt eine weitere Sensorik die Dachbahntemperatur. Eine Recheneinheit z.B. in Form eines Microcontrollers bestimmt dann aus den Sensordaten die Schweißtemperatur und die jeweilige Vorschubgeschwindigkeit und stellt diese Werte über eine Schnittstelle den Handhabungsgeräten bereit oder ermöglicht eine akustische und/oder optische Parameterdarstellung, so daß der Verarbeiter eine manuelle Einstellung des Schweißgeräts oder der Schweißautomaten vornehmen kann.

Ein in der Einrichtung vorhandener Speicherbaustein weist eine Look-up-Tabelle auf, die Referenz- oder Vergleichswerte enthält, so daß die Angabe von Parametern mittels Barcode auf ein Mindestidentifizierungsmaß beschränkt sein kann. Inhalt der Look-up-Tabelle können darüber hinaus Algorithmen oder Beziehungen sein, mit deren Hilfe bei eingegebener Materialart und zugeführter Bahntemperatur unmittelbar die Schweißtemperatur und die Vorschubgeschwindigkeit ohne aufwendige Rechenoperationen bestimmbar sind.

Darüber hinaus besteht erfindungsgemäß die Möglichkeit, die Daten im Speicherbaustein gemäß fortschreitendem Stand der Technik zu aktualisieren oder aber auch Erfahrungswerte individueller Natur einzugeben. Hierdurch ist letztendlich eine Lernfähigkeit der Einrichtung gewährleistet.

Die Sensorik zur Erfassung der exogenen Bedingungen besitzt einen pyroelektrischen Infrarotdetektor nach Art eines Infrarot-Handthermometers zur berührungslosen Messung der Oberflächentemperatur. Hierbei wird die Tatsache ausgenutzt, daß jeder Körper mit einer Temperatur oberhalb des natürlichen Nullpunkts infrarote Strahlung emittiert, wobei diese Strahlung in einem Spektralbereich oberhalb des sichtbaren Lichtes liegt. Eine Erfassung der Strahlung über einen geeigneten z.B. Silizium-Detektor ermöglicht dann die Ermittlung des jeweiligen Temperaturwerts. Dadurch, daß die Emissionsgrade von Kunststoffen im Bereich von 85 bis 95% liegen, ist eine sichere Temperaturerfassung möglich. Zusätzlich kann die Kunststoffbahn-Oberfläche mindestens abschnittsweise geschwärzt sein, um den Emissionsfaktor zu optimieren.

Weiterhin besitzt die Sensorik in einer Ausführungsform der Erfindung einen Reflexionsdetektor zur Ermittlung des Verschmutzungsgrads und/oder der Materialversprödung. Auch letztere Parameter sind für ein Verschweißen bei der Ersterstellung bzw. beim Reparaturverschweißen von Bedeutung und beeinflussen die Schweißtechnik.

Um eine Vergleichsreflexionsmessung zu ermöglichen, ist vorgeschlagen, daß am oder im Gerät eine Reinigungseinheit vorhanden ist, die z.B. mittels mechanischer Bürste oder ähnlichem eine Oberflächenreinigung der Bahn in einem bestimmten Abschnitt vornimmt, um dann die erwähnte Vergleichsmessung gereinigte/verschmutzte Oberfläche durchzuführen.

Über einen Feuchtemeßfühler, der der Sensorik zugehörig ist, besteht die Möglichkeit, die Umgebungsfeuchte zu ermitteln, um auf der Basis dieses weiteren exogenen Faktors die gewünschte Parameteroptimierung zu erreichen.

Die Recheneinheit ist dabei in der Lage, über eine Erfassung der Umgebungstemperatur, des Sonnenstands und des Luftdrucks eine Abschätzung des zu erwartenden Verlaufs der exogenen Faktoren für einen vorgegebenen Arbeitszyklus vorzunehmen. Zur Ermittlung des Sonnenstands kann auf eine an sich bekannte sphärische Diodenmatrix oder einen Photovoltaiksensor zurückgegriffen werden.

Die Ausgabeparameter, welche von der Recheneinheit zur Verfügung gestellt werden, sind in einem Datenspeicher abgelegt und können über eine integrierte Druckeinrichtung protokolliert werden, welches für ein Qualitätszertifikat eine wesentliche Voraussetzung darstellt.

Die vorgeschlagene Einrichtung ist durch Primär- oder Sekundärelemente netzunabhängig, kann aber auch netzgestützt betrieben werden. Bevorzugt die netzunabhängige Ausführungsform der Einrichtung ist als kleine, tragbare bauliche Einheit ausgebildet, die z.B. am Gürtel der Verlegefachkraft angebracht sein kann, so daß in einfacher Weise ein Einsatz vor Ort möglich ist.

Es liegt ebenfalls im Sinne der Erfindung, die Einrichtung zur Ermittlung von optimalen Schweißparametern mit einem Heißgas-Schweißautomaten baulich zu verbinden, d.h. in einen solchen Automaten zu integrieren, so daß dessen Einsatz und Wirkungsweise verbessert werden kann.

Verfahrensseitig wird also durch automatisches Bestimmen von Angaben mindestens der stofflichen Zusammensetzung der Dachbahn, der Bahntemperatur und der Luftfeuchte und über in einer Look-up-Tabelle abgelegte Referenzwerte mittels einer Recheneinheit ein Bestimmen der Verarbeitungsparameter, nämlich der Schweißtemperatur und der Vorschubgeschwindigkeit erreicht, wobei die Verarbeitungsparameter optisch und/oder akustisch zur Anzeige gebracht werden oder aber auch über eine Schnittstelle als Vorgabewerte in einen Schweißautomaten gelangen.

Bei einer verfahrensseitigen Ausgestaltung besteht die Möglichkeit, während ausgeführter Verschweißungen eine laufende Kontrolle der ermittelten Verarbeitungsparameter durchzuführen und Änderungswerte eines Soll/Ist-Vergleichs anzuzeigen sowie Korrekturparameter anzugeben. Hierfür findet über eine Schnittstelle ein Datenaustausch zwischen der Recheneinheit und der eigentlichen Heißgas-Schweißvorrichtung statt.

Die Erfindung soll nachstehend anhand eines Ausführungsbeispiels näher beschrieben werden.

Bei einem Ausführungsbeispiel wird von einem Handheld-Gerät ausgegangen, das über Sekundärelemente mit elektrischer Energie versorgt wird.

Das Gerät gemäß Ausführungsbeispiel besitzt ein Flüssigkristall-Display zur Anzeige von mindestens der Schweißtemperatur und der einzustellenden Vorschubgeschwindigkeit in z.B. Meter je Minute. Über eine Umschalteinrichtung können erfaßte Parameter der über eine Barcode-Sensorik eingelesenen Herstellerangaben ausgelesen bzw. angezeigt werden. Der Bediener kann sich dabei vor Ort von dem exakten Einlesen der Daten des auf der Dachbahn angebrachten Barcodes überzeugen.

Weiterhin besitzt das Gerät eine pyrometrische Meßeinrichtung, mit deren Hilfe die Oberflächentemperatur der Dachbahn bestimmt werden kann. Im einfachsten Fall kommt ein Infrarot-Digital-Handthermometer zum Einsatz, welches eine Thermokette auf Siliziumbasis als Infrarotdetektor besitzt. In diesem Fall wird im Spektralbereich von 8 bis 14*µ*m gearbeitet, wobei ein Meßbereich von im wesentlichen -20 bis 150°C erfaßbar ist. Um die Genauigkeit bei der berührungslosen Temperaturerfassung zu erhöhen, weist das Gerät eine Laser-Diode auf, um ein Pilotlicht zu erzeugen. Auf diese Weise gelingt es, einen Meßfleck zu markieren, um nicht irrtümlich irrelevante Bereiche zu sensieren.

Mit Erfassung der stofflichen Zusammensetzung der jeweiligen zu verlegenden Dichtungsbahn durch Einlesen des Barcodes und Temperaturbestimmung wird der Rechenvorgang zur Ermittlung der Schweißparameter ausgelöst. Die derart bestimmten Werte werden auf dem erwähnten Display zur Anzeige gebracht. Ergänzend oder alternativ kann durch ein Sprachmodul in Verbindung mit einem Signalwandler eine akustische Parameterausgabe erfolgen.

Eine optionale Möglichkeit des Geräts geht davon aus, den Verschmutzungsgrad der Dachbahn, z.B. durch Reflexionsmessung zu erkennen. Wird eine Verschmutzung erkannt, die eine sichere Schweißverbindung ausschließt, erfolgt das Auslösen eines optisch und/oder akustischen Warnsignals, mit der Anregung, mindestens im Bereich der zu erstellenden Schweißnaht eine Reinigung vorzunehmen.

Die Bestimmung der Umgebungstemperatur ermöglicht eine automatische Korrektur der Schweißtemperatur dann, wenn ausgehend von Normparametern vorgegebene Toleranzgrenzen als überschritten erkannt wurden. Für den Fall einer fehlerhaften Barcode-Leseoperation kann über eine an sich bekannte Zehnertastatur auch eine manuelle Eingabe anhand der dem Streifenmuster des Codes zugeordneten Ziffernkennzeichnung vorgenommen werden.

Alles in allem gelingt es mit der Erfindung, die Qualität beim Verschweißen von Kunststoff-Dachbahnen auch bei ganz unterschiedlichen exogenen Bedingungen und differenziertem Materialeinsatz zu optimieren, so daß sich die Verlegesicherheit und die Langzeitstabilität derartiger Flachdächer erhöht.

## Patentansprüche

1. Einrichtung zur Ermittlung von optimalen Parametern zum Betreiben von Handhabungsgeräten oder sonstigen Vorrichtungen zum Heißgasverschweißen von Kunststoff-Dachbahnen,
gekennzeichnet durch
eine erste Sensorik zur automatischen Erfassung von Herstellerangaben zur Identifikation des Dachbahnmaterials und dessen Eigenschaften anhand der Kennzeichnung selbst und/oder durch Auslesen einer Look-up-Tabelle eines in der Einrichtung vorhandenen Speicherbausteins sowie eine zweite Sensorik zur Erfassung der Dachbahntemperatur, wobei eine Recheneinheit aus den Sensorikdaten die Schweißtemperatur und die Vorschubgeschwindigkeit bestimmt und diese Werte über eine Schnittstelle den Handhabungsgeräten bereitstellt und/oder mittels eines Displays und/oder einer akustischen Anzeige als Vorgabewerte darstellt.

2. Einrichtung nach Anspruch 1,
dadurch gekennzeichnet, daß
die erste Sensorik eine Barcode-Leseeinrichtung umfaßt, welche einen entsprechenden Code, der herstellerseitig auf der Dachbahn an- oder aufgebracht wurde, einscannt, wobei der Code mindestens Angaben zur stofflichen Zusammensetzung, zum Alter und zum Hersteller enthält.

3. Einrichtung nach Anspruch 1 oder 2,
dadurch gekennzeichnet, daß
die zweite Sensorik einen pyroelektrischen Infrarot-Detektor aufweist.

4. Einrichtung nach Anspruch 3,
dadurch gekennzeichnet, daß
die erste oder zweite Sensorik einen Reflexionsdetektor zur Ermittlung des Verschmutzungsgrads und/oder der Versprödung des Dachbahnmaterials aufweist.

5. Einrichtung nach einem der vorangegangenen Ansprüche,
dadurch gekennzeichnet, daß
die erste oder zweite Sensorik einen Feuchtemeßfühler umfaßt.

6. Einrichtung nach einem der vorangegangenen Ansprüche,
dadurch gekennzeichnet, daß
über eine Erfassung der Umgebungstemperatur, des Sonnenstands und des Luftdrucks mittels der Recheneinheit eine Abschätzung des zu erwartenden Verlaufs der exogenen Faktoren für einen vorgegebenen Tagesgang oder Arbeitszyklus erfolgt.

7. Einrichtung nach einem der vorangegangenen Ansprüche,
dadurch gekennzeichnet, daß
die Schnittstellen- oder Ausgabeparameter in einem Datenspeicher abgelegt und/oder über eine integrierte Druckeinrichtung protokollierbar sind.

8. Einrichtung nach einem der vorangegangenen Ansprüche,
dadurch gekennzeichnet, daß
diese als kleine tragbare, autonom stromversorgte Einheit ausgebildet ist.

9. Einrichtung nach einem der Ansprüche 1 bis 7,
dadurch gekennzeichnet, daß
diese in einen Heißgas-Schweißautomaten baulich integriert ist.

10. Verfahren zur Ermittlung von optimalen Parametern zum Betreiben von Handhabungsgeräten oder sonstigen Vorrichtungen zum Heißgasverschweißen von Kunststoff-Dachbahnen,
dadurch gekennzeichnet, daß
durch automatisches Bestimmen von Angaben mindestens der stofflichen Zusammensetzung der Dachbahn, der Bahntemperatur und der Luftfeuchte über in eine Look-up-Tabelle abgelegte Referenzwerte mittels einer Recheneinheit die Verarbeitungsparameter, nämlich Schweißtemperatur und die Vorschubgeschwindigkeit vorgegeben sowie optisch und/oder akustisch zur Anzeige gebracht werden.

11. Verfahren nach Anspruch 10,
dadurch gekennzeichnet, daß
während ausgeführter Verschweißungen eine laufende Kontrolle der ermittelten Verarbeitungsparameter erfolgt und Änderungswerte eines Soll/Ist-Vergleichs angezeigt und Korrekturparameter ausgegeben werden, wobei hierfür über eine Schnittstelle ein Datenaustausch zwischen der Recheneinheit und der Heißgas-Schweißvorrichtung erfolgt.
